Europäisches Patentamt

European Patent Office

Office européen des brevets

(11) Publication number: **0 573 666 A1**

## EUROPEAN PATENT APPLICATION
### published in accordance with Art. 158(3) EPC

(21) Application number: 93900429.7

(22) Date of filing: 24.12.92

(86) International application number: PCT/JP92/01696

(87) International publication number: WO 93/12861 (08.07.93 93/16)

(51) Int. Cl.5: **B01D 39/14**, B01D 23/02, C02F 1/30

(30) Priority: 24.12.91 JP 112320/91 U
20.05.92 JP 154281/92

(43) Date of publication of application:
15.12.93 Bulletin 93/50

(84) Designated Contracting States:
AT BE CH DE DK ES FR GB GR IT LI LU MC NL SE

(71) Applicant: KATO RESEARCH INSTITUTE INC.
8-28, Hyakurakuso 4-chome,
Mino-shi
Osaka 562(JP)

(72) Inventor: KATO, Hiroya
8-28, Hyakurakuso 4-chome
Mino-shi Osaka 562(JP)

(74) Representative: Seaborn, George Stephen et al
c/o Edward Evans & Co.
Chancery House
53-64 Chancery Lane
London WC2A 1SD (GB)

(54) FILTER MEDIUM AND FILTER WHICH USE ANIMAL FIBERS.

(57) Animal fibers such as felt (14) are used together with far infrared radioactive ceramic powder (3), whereby the animal fibers are so improved in corrosion resistance as to be used as filter media. The animal fibers when used with powder of oyster shells, can be turned into a product having higher performance. Furthermore, the animal fibers used after being supersonically processed in a water or alcohol bath containing far infrared radioactive ceramic powder have improved shrink-resistance, so that a stabler product can be provided. Furthermore, such a filter medium (11) is rested on a porous plate (10) constituting the bottom surface of each of multi-stage drawers (9) housed in a box-shaped apparatus which is provided at the top thereof with an introducing opening (7) for solution to be treated and at the bottom thereof with a discharge opening (8), whereby a filter installed in a drain pipe and the like and used efficiently can be provided.

Technological Field

The present invention relates to a filter material by the use of animal fiber and a filter equipment.

Background of the Invention

Animal fibers, particularly wool fiber, had been used as precious natural fibers for a long time. However, their functions cannot be said to be fully investigated and their applications had not been sufficiently developed. For example, though animal fibers are excellent in absorbability of oily contamination, they are high in corrosiveness and fulling. Hence, it has been said they could not be practically used as filter materials (or cleaning materials).

A subject of the present invention is to provide a practical filter material (or a cleaning material) by the use of such an animal fiber.

In addition, another subject of the present invention is to provide a filter equipment for the treatment of waste liquid, in which an animal fiber as mentioned above is used as a filter material and which is easy in the exchange of the filter material, is compact and can be used efficiently.

Disclosure of the Invention

The inventor has found that the corrosiveness of animal fiber could be improved by the presence of a far-infrared radiating ceramic to solve the above-mentioned subject.

The filter material of the present invention is characterized in that an animal fiber is used together with a far-infrared radiating ceramic.

The filter material of the present invention has an improved bactericidal activity and gives an improved corrosion-resistance to the animal fiber to allow its stable application for a long period. At the same time, the fulling of the fiber against hot water and cold water is also improved to maintain the air permeability and the filtering property of the fiber stably. The product according to the present invention can be used as a cleaning filter for water and air and also is useful as a cleaning or washing material for kitchen and human body.

The filter material can also contain oyster-shell powder. In this case, the product becomes to be highly excellent in cleaning power by the purification property of the oyster-shell powder.

Here, the animal fiber means a fiber consisting of the fur or wool or hair grown on the body of an animal (for example, sheep, cashmere, camel and rabbit). The fiber can be used in a shape of down or cloth. However, it is preferred to be used in a shape of cloth such as a woven fabric or a non-woven fabric (felt).

As the far-infrared radiating ceramic, any of known ceramic powders such as of zirconia, alumina and titania types can be used. For example, it is preferred to use a far-infrared radiating ceramic as shown in Japanese Patent Publication No. 11809 of 1979, No. 21844 of 1979, No. 44928 of 1978 and No. 2421 of 1975 as well as Japanese Laid-Open Patent Publication No. 232268 of 1986. The size of the powder is not particularly restricted.

The filter material (or the cleaning material) of the present invention has a structure in which, for example, a cushioning material layer containing a far-infrared radiating ceramic powder and oyster-shell powder between animal fiber clothes. Such a filter material may be of a structure in which said cushioning material layer is provided on and/or under an animal fiber cloth depending on the condition for the application. However, in general it is preferably formed by a procedure in which an animal fiber cloth is made to be a bag and the cushioning material layer is provided in it or a procedure in which animal fiber clothes are placed both on and under the cushioning material layer and the periphery is sewed or adhered.

As the cushioning material layer, a water-permeable porous material such as a synthetic resin foam and a mat made of various fibers can be used. It is preferred to contain oyster-shell powder or a far-infrared radiating ceramic powder in layer. However, the far-infrared radiating ceramic powder may be used in a condition that it is adsorbed on a synthetic resin foam or a fiber mat.

Furthermore, the animal fiber may be used in the state of improving the shrink resistance by being immersed in a water bath containing a far-infrared radiating ceramic powder and treated by ultrasonic wave to remove the scale on the fiber surface (as described in PCT/JP92/00733). By replacing the above-mentioned water bath by a water bath containing an alcohol, it has been found that the far-infrared radiating ceramic powder can be adsorbed in the interior of the animal fiber to improve the shrink resistance as well as the dyeing property and the corrosion resistance.

Conventionally, an animal fiber such as wool fiber contains air in the scale and hence it has been said it is almost impossible to adsorb a ceramic in an aqueous medium. However, according to the present invention, the scale on the surface of an animal fiber is open by using an aqueous medium containing ethyl alcohol and at the same time penetration of the ceramic powder into the fiber is enhanced by the use of ultrasonic wave to realize effective adsorption of the far-infrared radiating ceramic powder in the animal fiber.

Thus, according to the present invention, a far-infrared radiating ceramic powder (in an amount of 10 to 80 weight % based on the aqueous medium) is fed and diffused in an aqueous medium containing ethyl alcohol and an animal fiber is immersed in the medium and treated by ultrasonic wave to realize effective adsorption of the fine ceramic powder in the animal fiber. Thus, the animal fiber containing a far-infrared radiating ceramic powder adsorbed in the fiber can be used efficiently as a purifying filter for water and air. For example, it has been confirmed a material prepared by a procedure in which a plural of animal fiber clothes containing adsorbed far-infrared radiating ceramic powder according to the present invention are piled and oyster-shell powder is sandwiched between them can be used as a very excellent purifying filter.

An animal fiber containing adsorbed far-infrared radiating ceramic powder can be also directly used as a filter material or a cleaning material for kitchen or human body.

In the above-mentioned procedure, the amount of the alcohol in the aqueous medium is not particularly restricted and it is preferred in general to be approximately 10 to 50 parts by weight based on 100 parts by weight of water. The ultrasonic wave treatment can be performed at approximately 18 to 20 kilohertz. Though the ultrasonic wave may be radiated from one direction to the animal fiber, it is preferred to be radiated from both upper and lower sides or from left and right sides or from the four directions.

Such a treatment can improve corrosion resistance by adsorbing the far-infrared radiating ceramic powder in the animal fiber and at the same time provides shrink resistance by removing the scale on the animal fiber surface. As the bactericidal activity and the shrink resistance of the animal fiber is improved with no practical loss of air permeability and feel, it does not shrink with hot water or cold water and can maintain its air permeability and filtering function and thus it can be used as a filter material stably for a long period.

A filter equipment for the treatment of waste liquid, which is easy in the exchange of the filter material and compact and can be used very efficiently, can be provided by using such a filter material according to the present invention.

This equipment is formed to be a box having a drawer or draowers and can be used by feeding the filter material in the drawer. The filter material can be used together with the far-infrared radiating ceramic powder as mentioned above.

For example, this equipment has an inlet for the liquid to be treated at the top and an outlet at the bottom. The box is constructed by multistage drawers and the bottom of the drawer is formed by a porous or multiperforated plate. At least one of the drawers is filled with a filter material comprising animal fiber and a far-infrared radiating ceramic powder.

As this equipment is a compact box type having an inlet for the liquid to be treated at the top and an outlet at the bottom, it can be installed stably and simply in any site of flowing liquid to be treated such as waste liquid. As many filter materials can be arranged in the manner of multistage in the box, the type of the filter material and the thickness of the layer can be easily changed according to the type of the liquid to be treated to enhance the treating effect. Furthermore, these filter materials are placed in the drawers, they can be exchanged easily to provide stably efficient treatment.

The filter material as shown above is fed in at least one of the drawers. The corrosion resistance of the animal fiber is improved by the presence of the far-infrared radiating ceramic powder. The presence of the oyster-shell powder enhances purifying activity and cleaning effect for the liquid to be treated.

The oyster-shell powder and the far-infrared radiating ceramic powder may be contained in the animal fiber layer for use. They can be also used by being placed between water-permeable porous materials such as synthetic resin foams or various fiber mats as mentioned above. Filtering materials usually used in the waste liquid treatment such as activated carbon can be also used in the same manner as above.

An animal fiber having improved shrink resistance and enhanced corrosion resistance by being treated with ultrasonic wave in a water or water-alcohol bath containing dispersed far-infrared radiating ceramic powder may be also used as mentioned above.

The shape of the main body of the filter equipment of the present invention, that is a box type equipment, is not particularly restricted. However, it is preferred that a motor-driven fan is provided in the upper inlet for the liquid to be treated and the liquid is uniformly fed in the equipment to make the best use of the filter material. Though the number of the inlet for the liquid to be treated may be only one, it is preferred a plural of them are provided to connect the manifolds of discharge pipes of the liquid to be treated such as waste liquid to them to enhance the treating effect. The bottom of the drawer is preferably made of a multiperforated plate of good water permeability and usually it is preferably a net made of a metal or a plastic. It is preferred that the lowest drawer has a bottom of practically reversed conical shape to enhance discharge of the treated liquid and has an outlet at the center. The outlet may be full open, but it is preferred to consist of a multiperforated plate in the same manner as in the other drawers to allow placing of the filter material.

Brief Description of the Drawings

Fig. 1 is an enlarged sectional view of the essential part of an example of the filter material of the present invention.

Fig. 2 is a perspective view of an example of the filter of the present invention partly cut.

Fig. 3 is a front view of an example of the filter equipment of the present invention partly cut.

Fig. 4 is a plan of the equipment of Fig. 3 partly cut in a condition the filter material is not used.

Fig. 5 is a bottom view of the equipment of Fig. 3.

Fig. 6 is a perspective view of an example of the filter equipment of the present invention.

Fig. 7 is a perspective view of an example of application of the filter of Fig. 2 partly cut.

Best Mode of Embodiments of the Invention

The present invention will be illustrated by Examples as follows.

Example 1

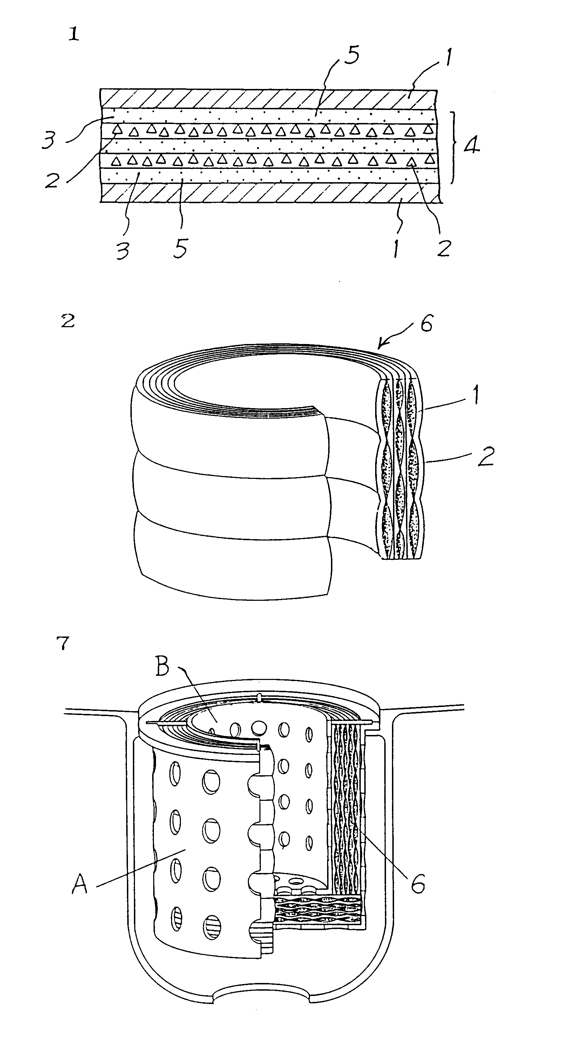

The product shown in Fig. 1 was constituted so that three layers of fiber layer or synthetic resin foam (5), which contained adsorbed far-infrared radiating ceramic powder (3) containing as the main components $SiO_2$, $Al_2O_3$ and MgO as shown in Example 2 of Japanese Patent Publication No. 11809 of 1979, were placed between two circular animal fiber clothes (felt) (1) and cushioning material layers (4) holding oyster-shell powder (2) were provided between the three layers of fiber layer or synthetic resin foam (5). The periphery of the animal fiber clothes (1) was sewed so that the cushioning material layers (4) was not exposed.

This product could be used effectively as a filter material in the discharge outlet of a kitchen and also exerted a very excellent cleaning effect for cleaning a bathtub and a kitchen with no special use of a detergent. Though the animal fiber cloth (1) on the surface shrinked to some extent as it is frequently exposed to hot water or cold water, it was not corroded and could be used stably for a very long period.

Example 2

To a treating solution comprising:
100 parts by weight of a far-infrared radiating ceramic powder,
100 parts by weight of water and
40 parts by weight of ethyl alcohol,
a wool fiber non-woven fabric made by needle punch procedure was fed and an ultrasonic wave treatment of 18 kiloherz was carried out for 10 minutes under stirring the treating solution.

The product had an enhanced dyeing property and was excellent in both of corrosion resistance and shrink resistance. As the above fine ceramic powder, there was used that mainly containing $SiO_2$, $Al_2O_3$ and MgO and containing fine powder of not larger than 5 $\mu$m to 50 % or more.

When observed by electron microscopy, the product thus prepared had a structure in which the scale on the fiber surface was uniformly removed with no damage of the fiber interior and the far-infrared radiating ceramic powder was dispersed and adsorbed in the fiber. As the result, the fiber had a good feel and was excellent in shrink resistance and corrosion resistance.

The product contained no unnecessary chemical substance, did not shrink by hot water and cold water, existed stably, and was excellent in cleaning effect and filtering ability and hence could be used efficiently as a commercial purifying filter in various applications.

Example 3

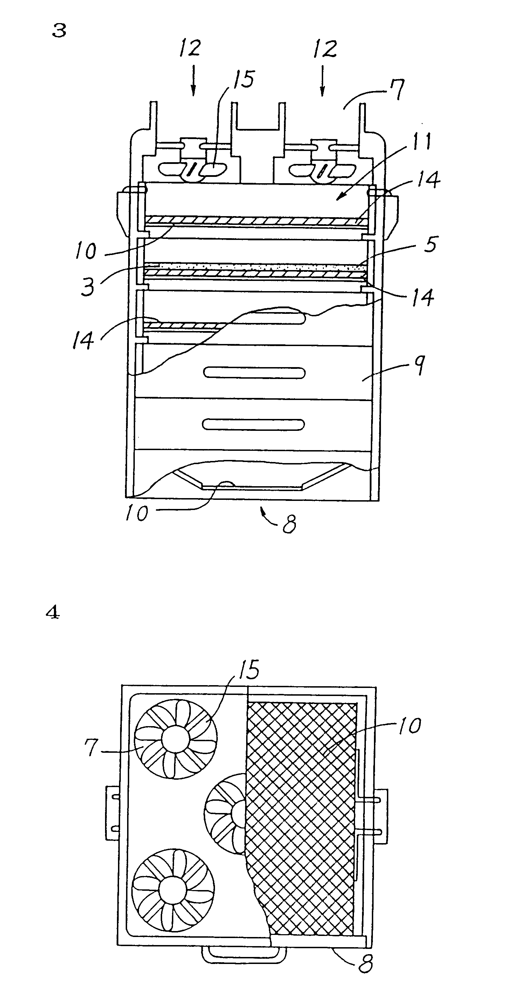

Two sheets of the product prepared by Example 2, that is the animal fiber (non-woven wool fabric) (1) containing adsorbed far-infrared radiating ceramic powder, were piled as shown in Fig. 2 and oyster-shell powder (2) was sandwiched between them to form a filter (6). The filter (6) was installed to the discharge outlet of a bathtub and a kitchen to show a very efficient water purifying ability. Though exposed frequently to hot water and cold water, the filter (6) maintained stable appearance and showed no change in discharging efficiency.

An example of installing such a filter (6) to the discharge outlet of the sink of a kitchen is shown in Fig. 7. In this example, a filter (6) is placed between an outer box A and an inner box B each having a number of holes on the periphery and the bottom for use. The filter (6) can be easily exchanged. The same means can be applied for a discharge pipe and a flood control channel.

Example 4

The product of Example 2 was piled simply and sewed and used as a cleaning appliance of kitchen and as a cleaning appliance of human body. It could be used in a fresh condition for a long period with a very good feel. In addition, it showed a very excellent cleaning effect with no use of a detergent.

Example 5

(A) A non-woven wool fabric was immersed in water and treated with ultrasonic wave of 90W, 18.2 KHz for 20 minutes.

(B) A same non-woven fabric as in (A) was immersed in a treating solution containing water, ethyl alcohol and a fine powder of far-infrared radiating ceramic in a ratio of 150:40:100 and treated with ultrasonic wave of 90-100W, 18 KHz for 30 minutes and then washed with tap water.

The change in temperature of the treating solution in the treatment of (A) and (B) as well as the appearance of the non-woven fabric after treated were as follows.

|  | Temperature change($^\circ$C) | | | Appearance after treated |
|---|---|---|---|---|
|  | 10 min. | 20 min. | 30 min. |  |
| Product (A) | 41 | 53 | - | Fluff and shrinkage observed. |
| Product (B) | 48 | 58 | 63 | No change from untreated. |

From the result, it was found that, by the treatment (B) using water, ethyl alcohol and a far-infrared radiating ceramic, the wool fiber showed no shrinkage nor fluff to keep very stable appearance though the temperature of the treating solution rose to higher than 60$^\circ$C.

During the treatment (A) using water alone, fine bubbles covered the fiber surface. Contrary to it, such a phenomenon was not seen in the treatment (B) according to the present invention and an efficient ceramic treatment of the fiber could be attained.

Though the product of the treatment (A) was fulled with hot water and was poor in corrosion resistance and could not be used as a cleaning appliance or a filter material, the product of the treatment (B) was excellent in bactericidal activity and shrink resistance and could be used stably as a cleaning appliance or a filter material.

Example 6

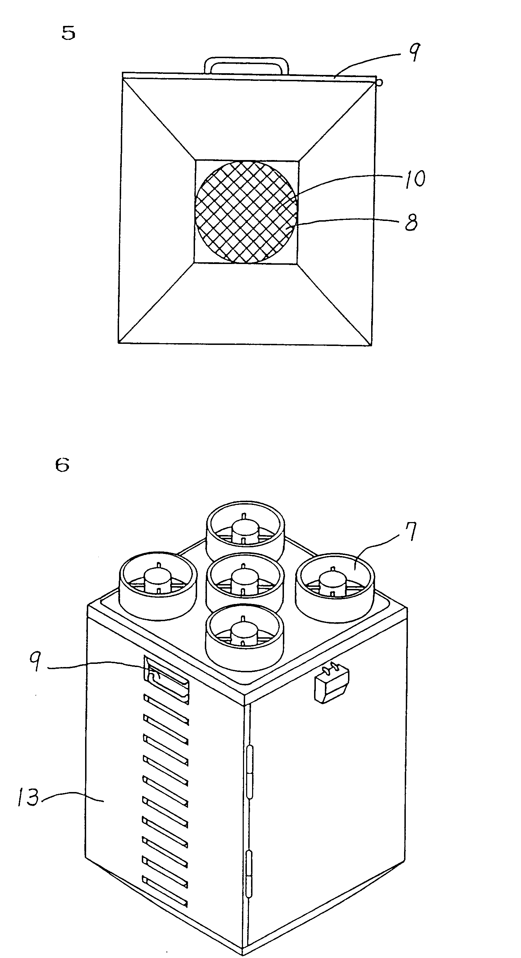

The equipment shown in Fig. 3 is a box type equipment having five inlets (7) for the liquid to be treated at the top and one discharge outlet (8) at the bottom. Multistage drawers (9) are provided in the box. The bottom of each drawer (9) is made of a multiperforated plate (10) consisting of stainless steel net and can place a filter material (11) on it.

A motor-driven fan (15) is equipped to each inlet (7) for the liquid to be treated in the equipment. The liquid (12) to be treated can be thus uniformly dispersed in the equipment by the fan when introduced (as shown in Figs. 4 and 5.). An openable lid (13) may be equipped on the front of the equipment as shown in Fig. 6 so that the drawer (9) can be stably fixed in the box during the treatment.

A pile of a synthetic resin foam (5) prepared by adsorbing a far-infrared radiating ceramic powder (3) containing as the main component $SiO_2$ $Al_2O_3$ and MgO on a felt (14) of animal fiber (wool) was used in the drawer (9) of the equipment of Fig. 3 and arranged so that oyster-shell powder was placed between the felt (14) and the synthetic resin foam (5).

The felt (14) was prepared by a procedure in which 10 to 50 parts by weight of a far-infrared radiating ceramic powder containing particles of not larger than 5 $\mu$m in an amount not less than 50 weight % is

6

mixed in 100 parts by weight of water to prepare a treating bath and the felt was treated with ultrasonic wave of 26 KHz from upper and lower sides or from left and right sides for 10 minutes in the bath to remove the scale on the fiber surface to make the fiber shrink resistant.

Accordingly, in this filter material, the animal fiber made to be shrink resistant by the removal of the scale not only exerts a very excellent filtering ability stably independent on the type and the temperature of the liquid to be treated but also the bactericidal ability is enhanced by the presence of the far-infrared radiating ceramic powder and hence the animal fiber is not corroded and a stable treatment can be made in a very long period.

On the other hand, in the case the product prepared by Example 2, that is non-woven wool fabric in which the scale was removed from the fiber surface and which contains adsorbed far-infrared radiating ceramic powder, is used as the filter material and it s fed in each drawers, the equipment cold be used as one of high durability and of excellent filtering effect.

Industrial Application Field

The animal fiber, which had problems in corrosion and shrink resistance and was difficult to be used commercially, can be now used in new fields as a cleaning material and a filter material by being used in combination with a far-infrared radiating ceramic powder. By treating an animal fiber with ultrasonic wave in a water or water-alcohol bath containing dispersed far-infrared radiating ceramic powder, bactericidal activity and shrink resistance of the animal fiber are highly improved to give a filter material of higher utility.

The performance of the product according to the present invention is further improved remarkably by using oyster-shell powder rich in purifying activity in combination.

In addition, a filter equipment using such a filter material according to the present invention is a very compact box type equipment and hence it can be applied for any liquid to be treated to exert filtering effect of high efficiency. As the filter material can be placed on the drawers for use, only the filter material in the upper drawer can be replaced frequently to keep stably good filtering effect. Furthermore, the present invention can adsorb and remove stably the contamination such an oil contained in the liquid to be treated by using an animal fiber excellent in its adsorbability.

## Claims

1. A filter material characterized in that an animal fiber is used together with a far-infrared radiating ceramic powder.

2. A filter material characterized in consisting of an animal fiber product which contains a far-infrared radiating ceramic powder absorbed in the interior of the animal fiber.

3. A filter material according to Claim 2, in which the far-infrared radiating ceramic powder is absorbed in the interior of the animal fiber by immersing the animal fiber product in a treating liquid containing diffused far-infrared radiating ceramic powder in an aqueous medium containing ethyl alcohol and then applying an ultrasonic wave treatment.

4. A filter material according to Claim 3, in which oyster-shell powder is sandwiched between a plural of animal fiber clothes containing far-infrared radiating ceramic powder absorbed in the interior of the animal fiber.

5. A filter material characterized in that its surface consists of an animal fiber cloth, and a porous cushioning material layer containing oyster-shell powder and a far-infrared radiating ceramic powder is provided in its interior.

6. A filter equipment which is a box type equipment having an inlet for the liquid to be treated at the top and having a discharge outlet at the bottom, characterized in that the box is constituted by multistage drawers and the bottom of the drawer consists of a multiperforated plate and a filter material is placed on said multiperforated plate and an animal fiber is used as said filter material together with a far-infrared radiating ceramic powder.

7. A filter equipment according to Claim 6, in which an animal fiber comprising a far-infrared radiating ceramic fine powder absorbed in its interior is used as the filter material.

8. A filter equipment according to Claim 6, in which oyster-shell powder is used together with an animal fiber and a far-infrared radiating ceramic powder.

3

4

International application No.

PCT/JP92/01696

**A. CLASSIFICATION OF SUBJECT MATTER**

Int. $Cl^5$ B01D39/14, B01D23/02, C02F1/30

According to International Patent Classification (IPC) or to both national classification and IPC

**B. FIELDS SEARCHED**

Minimum documentation searched (classification system followed by classification symbols)

Int. $Cl^5$ B01D39/14-39/16, 23/02, C02F1/30

Documentation searched other than minimum documentation to the extent that such documents are included in the fields searched

| | |
|---|---|
| Jitsuyo Shinan Koho | 1926 - 1992 |
| Kokai Jitsuyo Shinan Koho | 1971 - 1992 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, A, 64-68571 (JF Corp.), March 14, 1989 (14. 03. 89), (Family: none) | 1-8 |
| A | Microfilm of the specification and drawings annexed to the written application of Japanese Utility Model Application No. 62242/1988 (Laid-Open No. 167888/1989) (Fuji Giken Kogyo K.K.), November 27, 1989 (27. 11. 89), p. 7, ℓ. 8-14 (Family: none) | 1-8 |
| A | JP, U, 62-75808 (Tamura Seisakusho Co., Ltd.), May 15, 1987 (15. 05. 87), (Family: none) | 6-8 |

[X] Further documents are listed in the continuation of Box C.     [ ] See patent family annex.

| | |
|---|---|
| *  Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| February 8, 1993 (08. 02. 93) | March 2, 1993 (02. 03. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)